# EUROPEAN PATENT APPLICATION

(11) **EP 2 253 245 A1**
(43) Date of publication of application: **24.11.2010**
(21) Application number: 10162656.2
(22) Date of filing: 12.05.2010
(51) Int. Cl.: A47B 96/02, A47B 55/02, A47B 47/02, B65G 1/02

(54) **Profile for shelving reinforcement meshes designed for bearing palletized loads**

(30) Priority: 14.05.2009 ES 200930171
(71) Applicant: Metalmalla Electrosoldados, S.A., 08930 Sant Adria de Besos (ES)
(72) Inventor: Planas Pérez, Salvador, 08930, SANT ADRIÀ DE BESÒS (ES)
(74) Representative: Ponti Sales, Adelaida

(57) **Abstract**

Profile for shelving reinforcement meshes designed for bearing palletized loads comprising a grooved body provided to withstand a mesh element (2), and including flat opposed ends (4) to rest on two crossbeams (5) integral with the structure of the shelf (6). It is **characterized in that** the profile (1) includes fitting means (7) to detachably fix the mesh element (2). It is obtained a profile (1) that permits to adapt the reinforcement mesh according to the loads to be withstood efficiently and with a lower product cost.

## Description

The present invention refers to a profile for shelving reinforcement meshes designed for bearing palletized loads.

### BACKGROUND OF THE INVENTION

Reinforcement meshes of shelves designed for bearing palletized loads are known, comprising at least a metallic mesh element fixed to profiles, said profiles resting by their ends on two crossbeams integral with the shelf structure.

US 5779069 discloses a reinforcement mesh of this kind, in which the profiles include an inverted U-shaped grooved body, and with their flat opposite ends provided to rest on the crossbeams.

The mesh element is integrally joined to the upper part of the profiles by electro-welding forming a single structure. Furthermore, said mesh element includes two opposed folded ends so that they embrace the frontal and rear zones of the crossbeams, preventing the transversal movement of the reinforcement mesh with respect to the crossbeams.

The profiles provide the reinforcement to the mesh element, i.e. they support the weight of the pallets, and the mesh element provides security if the palletized load is lost.

However, this kind of profiles for reinforcement meshes present a number of drawbacks that are described hereinafter:

In practice it has been proven that when a load is placed on the reinforcement mesh in the profiles is produced the called saber effect, which causes a continued stress on the welding points, which usually are detached finally with the risk involved and with the breakdown of the mesh assembly, which cannot be used anymore.

On the other hand, the folds of the mesh element to embrace the crossbeams are completely weak because as the time passes, and on account of the overstress, they became out of shape with the risk that the load can fall, and making also difficult the placement of new loads.

Furthermore, the production time and costs of the reinforcement mesh is greatly increased because the folding operation of the ends of the mesh element, and also because said electro-welding operation.

Currently, the commercial size of the shelves is 2700 mm, reinforcement meshes being manufactured with already established format of three kinds, which have three or four profiles already welded to the mesh element, determining therefore a load in each model with no possibility to increase more profiles, because that already have a preset distribution. Therefore, it is impossible and unfeasible to place more load than they withstand at a given moment.

The resistance of the reinforcement meshes is poor taking into account the loads of the pallets to be withstood. In fact, it is not possible to guarantee mesh of a great load, because they range from 1000 to 2000 kg, so that they are necessary custom-made meshes with a high cost, that in the greater part of cases involves an increase in the final price of a 600% over the value of the standard mesh, and on the other hand the damage resulting from the delivery period, usually from 30 to 60 days.

When the reinforcement meshes are palletized, it has been proved that in a pallet about 40 units can be placed forming a height of 1.5 m, which when this product is transported, the carriage that passes on per mesh increases considerably its price, mainly when it is exported because in a trailer can be supplied in plant about 1120 meshes with a size of 880 x 1100, using 24 pallets.

### SUMMARY OF THE INVENTION

The object of the profile for shelving reinforcement meshes designed for bearing palletized loads of the present invention is to solve the drawbacks present in the profiled known in the art, providing a profile that permits to adapt the reinforcement mesh according to the loads to be withstood in a efficient manner and with a lower cost of the product.

The profile for shelving reinforcement meshes designed for bearing palletized loads of the present invention is of the kind that comprises a grooved body provided to withstand a mesh element, and including flat opposed ends to rest on two crossbeams integral with the structure of the shelf, and it is **characterized in that** the profile includes fitting means for detachably fixing the mesh element.

Thanks to the fitting means of the profile, no welding is necessary to join the mesh element with the profiles, as in the state of the art, but the reinforcement mesh can be mounted when the operators themselves mount the shelves, because it involves no difficulty.

Therefore, modifying the number of profiles to be used and with a suitable distribution of them, it is possible to adapt the reinforcement mesh according to load to be withstood.

On the other hand, as it is not necessary any welding process, it is possible to use profiles treated with a protective coating, such as a galvanization, with no risk of losing the properties of said coating, and with no subsequent touches.

Furthermore, as the mesh elements do not require any extra operation, and they are provided independent from the profiles, it is possible to optimize its transportation, so that the carriage cost that pass on per mesh element is minimum.

Advantageously, the fitting means of each profile comprises a plurality of notches of open profile, made along the upper edges of the grooved body, provided to fit in the respective longitudinal rods of the mesh element.

According to an embodiment of the present invention, said notches present a shape, preferably an L shape, including a first part provided to insert and remove the respective rod of the mesh element, and a second part provided for its retention in the use position.

Advantageously, the profile includes engagement means to the crossbeams.

Preferably, the engagement means are configured by a folding made in both flat ends of the profile, so that said folded ends can embrace at least partially the profile of the crossbeams. Therefore, the folded ends of the profile permit a secure support on the crossbeams.

Optionally, said folded ends include immobilization means to the crossbeams. Therefore, a simple and efficient fixation on the crossbeams is obtained.

Advantageously, the upper surface of the folded ends in their use position is aligned with the upper part of the mesh element.

Therefore, the mesh element remains locked inside the profiles, so that it does not deform when it receives the load. Differently from the reinforcement meshes known in the state of the art, the mesh element has strictly a security function, and the resistance to the load is done by the profiles. Furthermore, as the mesh is at the level of the crossbeams, it makes possible the pallet to slide on the mesh with no hitch, making its positioning easier.

Advantageously, the number of profiles and their distribution for forming a reinforcement mesh depend on the size and weight of the load to withstand.

Therefore, it is possible to establish some standard formats of reinforcement mesh, with which the load resistances can be changed always, because it is as simple as increasing the number of profiles. Hence, the load needs required each one moment can be provided in the same installation without need of changing all the reinforcement meshes, as happens in the state of the art. Furthermore, it is an operation that the operator himself can do.

### BRIEF DESCRIPTION OF THE DRAWINGS

To facilitate the description of what has been described previously some drawings are attached in which, diagrammatically and only as a non-limitative example, an embodiment of a profile for shelving reinforcement meshes designed for bearing palletized loads according to the invention is shown, in which:
Fig. 1 is a perspective view of a reinforcement mesh, showing the profiles of the invention mounted on two crossbeams integral with the structure of the shelf;
Fig. 2 is an enlarged view of a profile of Fig. 1;
Fig. 3 is a partial view of the profile, showing one of its folded ends;
Fig. 4 is a partial view of the reinforcement mesh, showing the folded ends of two profiles joined to a crossbeam; and
Figs. 5-7 show respectively the different production steps of a profile from a metallic plate.

### DESCRIPTION OF A PREFERRED EMBODIMENT

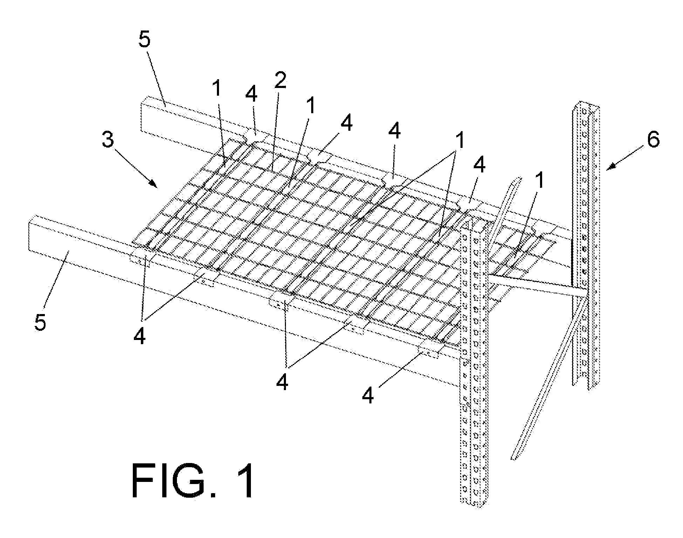

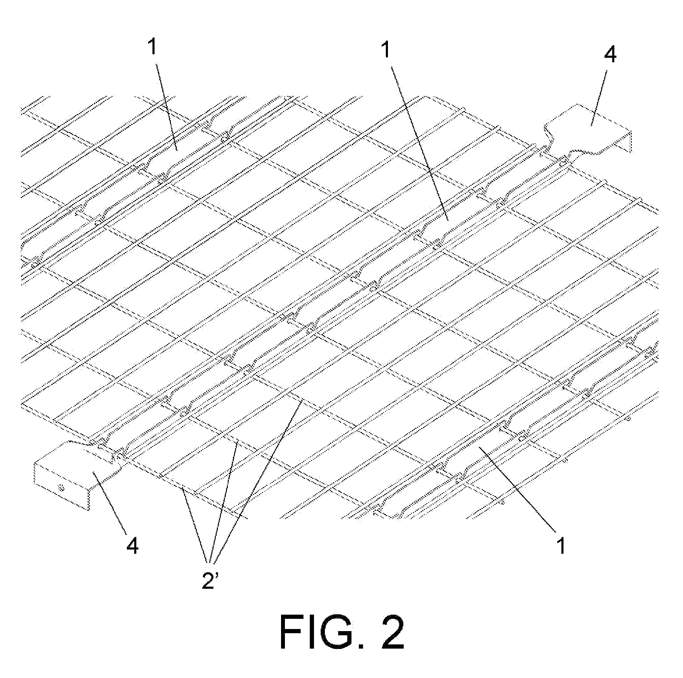

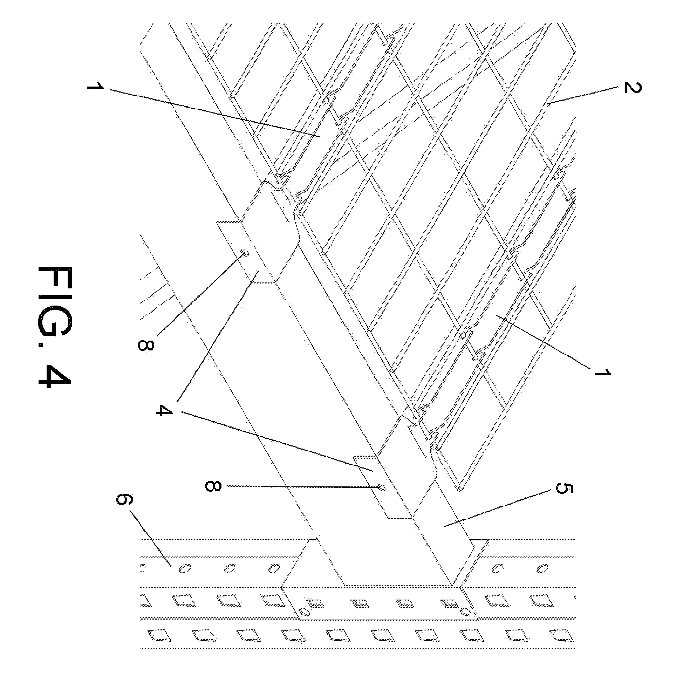

In Figs. 1-4 a number of metallic profiles, object of the present invention, can be seen, which withstand at least a metallic mesh element 2 to form reinforcement meshes 3 provided to withstand palletized loads. In Fig. 1 is shown one mesh element 2 engaged on five profiles 1.

Each profile 1 presents a grooved profile, in this case V-shaped, provided with flat opposed ends 4, and each profile 1 being susceptible of resting by its ends 4 on two crossbeams 5 integral with the structure of a shelf 6.

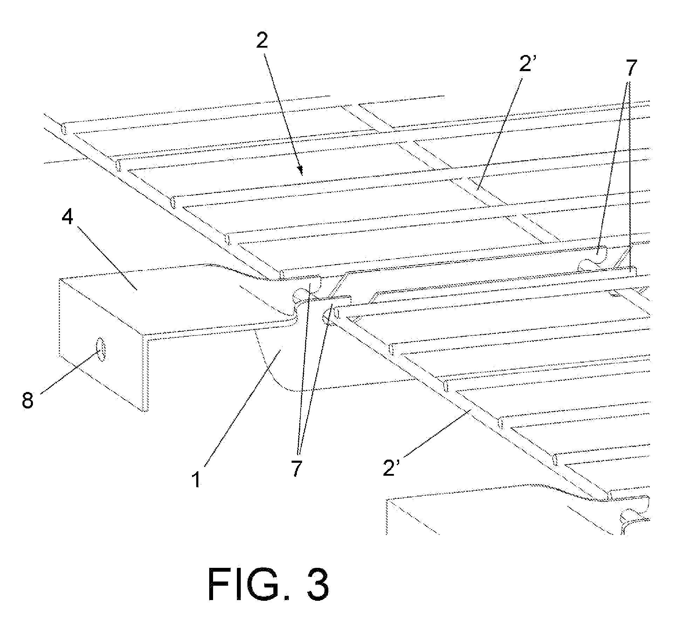

Furthermore, each profile 1 includes fitting means 7 to detachably fix the mesh element 2 (see Fig. 3). In this embodiment, said fitting means comprises a number of notches 7 of open profile, made along the upper edges of the grooved profile 1, provided to fit in the respective longitudinal rods 2' of the mesh element 2.

Said notches 7 present a shape, preferably an L shape, including a first part provided to insert and remove the respective rod 2' from the mesh element 2, and a second part provided to retain it in the use position.

Thanks to the fitting means 7, no welding is required to join the mesh element 2 with the profiles 1 as in the state of the art, but the assembly of the reinforcement mesh 3 can be done when the operators themselves mount the shelves, because it does not involve any difficulty.

Furthermore, as the mesh element 2 and the profiles 1 are independent, it is possible to optimize its transportation, so that the prize of carriage per mesh element 2 is minimum. E.g. it is possible to place in a trailer 7400 mesh elements 2 with a size of 880 x 1100, using 37 pallets.

On the other hand, each profile 1 includes engaging means 4 with the crossbeams 5, which are shaped by a folding 4 made in both flat ends of the profile 1, so that said folded ends 4 can embrace at least partially the profile of the crossbeams 5. Hence, the folded ends 4 of the profile 1 permit a secured support on the crossbeams 5.

Said folded ends 4 can include immobilization means 8 to the crossbeams 5. Therefore, it is possible to anchor said profiles 1 to the crossbeams 5, fixing them e.g. with an auto-threading screw (not shown). Hence, a simple and efficient fixation on the crossbeams 5 is obtained.

It must be pointed out that the upper surface of the folded ends 4 in its use position is aligned with the upper part of the mesh element 2. Hence, the mesh element 2 is not deformed when it receives the load, and it also makes possible the pallet to slide on the reinforcement mesh 3 with no hitches, facilitating its positioning.

Differently from the reinforcement meshes known in the state of the art, the mesh element 2 is strictly for security functions, and the resistance to the load is done by the profiles 1.

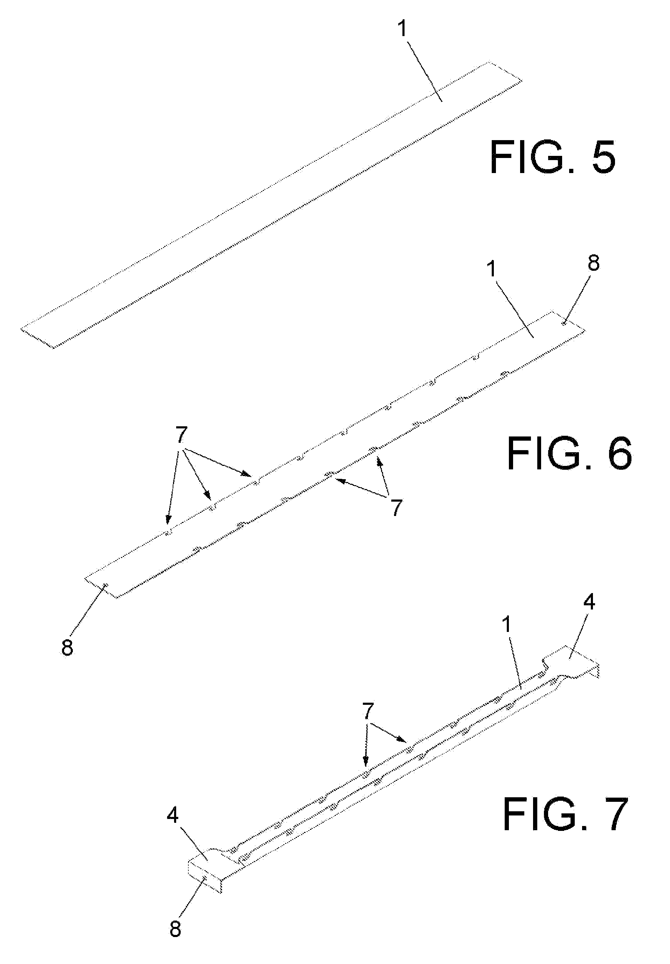

The manufacturing method of a profile 1 is carried out from a metallic plate (see Fig. 5).

Firstly, a number of notches 7 with open profile are made along the longitudinal edges of said metallic plate, provided to be detachably fitted with the rods 2' of the mesh element 2, as described previously (see Fig. 6). Optionally, a hole 8 can be made at each end of the profile 1 for its immobilization, once placed on the crossbeams 5, inserting a screw or the like.

Secondly, a longitudinal folding is done to form a grooved profile, which in this case is V-shaped, except the opposite ends, which are flat. Finally, the folding of said ends is carried out, so that said folded ends 4 can embrace the crossbeams 5, preventing its transversal movement (see Fig. 7).

It must be pointed out that the number of profiles 1 and their distribution depend on the size and weight of the load to be withstood.

Hence, it is possible to establish e.g. three standard format of reinforcement mesh 3, with which at any moment the load resistances can be changed, because is so simple as increasing the number of profiles 1. Therefore, the load needs required each one moment can be provided in the same installation without need of changing all the reinforcement meshes 3, as happens in the state of the art. Furthermore, it is an operation that the operator himself can do.

Therefore, it is possible to modify the reinforcement mesh 3 that was shaped to withstand pallets with a preset load, e.g. 800 kg, in any moment, transforming it in a mesh that can withstand a greater load, e.g. 2000 kg, just in minutes only redistributing the profiles 1.

In this case, only more profiles 1 are needed, which are standard and with an immediate delivery period, making possible to change the loads at the same installation at different levels in the same storing module, without any difficulty. To this end a table of loads detailing the distribution of the profiles 1 will be provided to guarantee the desired resistance in each case according the load needs.

## Claims

1. Profile (1) for shelving reinforcement meshes (3) designed for bearing palletized loads, comprising a grooved body provided to withstand a mesh element (2), and including flat opposite ends to rest on two crossbeams (5) integral with the structure of the shelf (6), **characterized in that** the profile (1) includes fitting means (7) for detachably fixing the mesh element (2).

2. Profile (1) according to claim 1, wherein said fitting means of each profile (1) comprises a plurality of notches (7) of open profile, made along the upper edges of the grooved body (1), provided to fit in the respective longitudinal rods (2') of the mesh element (2).

3. Profile (1) according to claim 2, wherein said notches (7) present a shape, preferably an L shape, including a first part provided to insert and remove the respective rod (2') of the mesh element (2), and a second part provided for its retention in the use position.

4. Profile (1) according to claim 1, which includes engaging means (4) with the crossbeams (5).

5. Profile (1) according to claim 4, wherein the engaging means are configured by a folding made at both flat end of the profile (1), so that said folded ends (4) can embrace at least partially the profile of the crossbeams (5).

6. Profile (1) according to claim 5, wherein said folded ends (4) include immobilization means (8) to the crossbeams (5).

7. Profile (1) according to claim 5 or 6, wherein the upper surface of the folded ends (4) in its use position is aligned with the upper part of the mesh element (2).

8. Profile (1) according to anyone of the previous claims, wherein the number of profiles (1) and their distribution for forming a reinforcement mesh depend on the size and weight of the load to withstand.
